Europäisches Patentamt

European Patent Office

Office européen des brevets

(11) Numéro de publication: **0 041 888**

**A1**

(12) # DEMANDE DE BREVET EUROPEEN

(21) Numéro de dépôt: **81400877.7**

(51) Int. Cl.³: **G 03 B 21/11**

(22) Date de dépôt: **01.06.81**

(30) Priorité: **10.06.80 FR 8012871**

(43) Date de publication de la demande:
**16.12.81 Bulletin 81/50**

(84) Etats contractants désignés:
**DE GB IT**

(71) Demandeur: **COMMISSARIAT A L'ENERGIE ATOMIQUE Etablissement de Caractère Scientifique Technique et Industriel**
**B.P. 510**
**F-75752 Paris Cedex 15(FR)**

(72) Inventeur: **Labrunie, Guy**
**La Fontaine Amélie**
**F-38330 Saint Ismier(FR)**

(72) Inventeur: **Melnick, Igor**
**43 bis, rue Malligand**
**F-38000 Grenoble(FR)**

(74) Mandataire: **Mongrédien, André et al,**
**c/o Brevatome 25, rue de Ponthieu**
**F-75008 Paris(FR)**

(54) Procédé et dispositif de repérage d'informations portées par une microfiche.

(57) Procédé et dispositif de repérage d'informations portées par une microfiche.

A un lecteur de microfiches comportant un système d'éclairage (1) envoyant, par l'intermédiaire d'un condenseur (3), un faisceau lumineux sur la microfiche (4) enserrée par deux plaques porteuses (5,6) transparentes, l'information lumineuse issue de la microfiche (4) étant ensuite transmise à un système de visualisation (V), l'invention consiste à ajouter une plaque (7) transparente, parallèle aux plaques (5,6) et portant des signes de repérage, le repérage des informations portées sur la microfiche (4) se faisant grâce à deux mises au point successives, l'une faisant apparaître les signes de repérage, l'autre faisant apparaître les informations correspondantes de la microfiche (4).

Application au repérage de la position d'informations portées par une microfiche.

FIG.1

EP 0 041 888 A1

La présente invention concerne un procédé et un dispositif de repérage d'informations portées par une microfiche.

On sait qu'une microfiche contient une très grande quantité d'informations et qu'il est très utile de disposer d'un système de repérage, c'est-à-dire de signes permettant, soit de repérer la position d'une information portée par la microfiche, soit, inversement, de retrouver une information à l'aide des signes correspondants.

Ces signes doivent si possible apparaître superposés aux informations correspondantes dans l'image projetée sur l'écran du lecteur de microfiches pour effectuer le repérage puis disparaître pour permettre une lecture aisée des informations. Il n'existe pas actuellement de tels systèmes de repérage. Le brevet des Etats Unis d'Amérique n° 3,319,518 décrit un système de visualisation dans lequel des micro-images portées par un microfilm sont visualisées sur un écran tandis que des signes gravés sur une plaque transparente et destinés au repérage des micro-images sont visualisés sur un autre écran. Pour l'utilisateur, ce système apparaît peu commode puisque la visualisation des signes et des micro-images ne s'effectue pas sur le même écran. De plus, la possibilité de superposer les informations portées par le microfilm (c'est-à-dire les micro-images) et les signes de repérage correspondants n'est pas envisagée dans le brevet cité ci-dessus.

La présente invention a pour but de remédier à ces inconvénients et elle vise un procédé et un dispositif de repérage d'informations portées sur une microfiche.

B 7013.3 PV

L'invention a tout d'abord pour objet un procédé de repérage d'informations portées sur une microfiche placée dans un lecteur de microfiches, ce lecteur comportant un système d'éclairage envoyant un faisceau lumineux sur la microfiche enserrée par une plaque porteuse inférieure et une plaque porteuse supérieure transparentes, parallèles, solidaires l'une de l'autre, déplaçables selon deux directions perpendiculaires grâce à un système de déplacement, l'information lumineuse issue de la microfiche étant ensuite transmise à un système de visualisation comprenant un objectif de projection muni d'un diaphragme d'ouverture, procédé caractérisé en ce qu'il consiste à faire deux visualisations successives sur un même écran, l'une faisant apparaître des informations portées sur la microfiche, l'autre faisant apparaître des signes de repérage correspondant à ces informations et leur faisant face sur une plaque de repérage transparente, parallèle aux plaques porteuses et solidaire de celles-ci.

Un utilisateur peut ainsi repérer de façon commode les informations portées par la microfiche puisque la visualisation de celles-ci et des signes de repérage correspondants s'effectue sur le même écran.

Les plaques porteuses maintiennent, bien entendu, la microfiche en position et orientation par rapport au système de déplacement et au système optique (éclairage, visualisation).

Grâce au parallélisme de la plaque de repérage et des plaques porteuses, et au positionnement fixe de la microfiche dans ces plaques porteuses, il y a une correspondance biunivoque entre les signes de repérage portés par la plaque de repérage et les informations situées sur la microfiche et directement opposées aux signes de repérage.

B 7013.3 PV

En visualisant d'abord, grâce au système de visualisation, une information de la microfiche et ensuite le signe de repérage qui lui est directement opposé sur la plaque de repérage, on peut ainsi repérer l'information.

Inversement, en visualisant d'abord, grâce au système de visualisation, un signe de repérage et ensuite l'information qui lui est directement opposée sur la microfiche, on peut ainsi retrouver cette information sur la microfiche.

Dans un mode de mise en oeuvre particulier du procédé objet de l'invention, les visualisations successives sont réalisées en déplaçant l'objectif de projection parallèlement à son axe Z'Z pour mettre au point alternativement sur des informations de la microfiche et sur les signes de repérage correspondants portés sur la plaque de repérage.

Ce mode de mise en oeuvre particulier fait apparaître successivement et au choix l'image de la microfiche et celle des signes portés par la plaque de repérage.

Dans un autre mode de mise en oeuvre particulier, les visualisations successives sont réalisées en faisant une mise au point sur les informations portées par la microfiche et en adaptant la profondeur de champ de façon que cette dernière soit suffisamment grande pour que, sur l'écran, l'image des signes de repérage apparaîsse superposée aux informations portées par la microfiche lors de la visualisation faisant apparaître les signes de repérage.

Dans ce cas, les visualisations successives peuvent, par exemple, être réalisées en mettant au point sur la microfiche, la plaque de repérage étant placée le plus près possible de l'une des deux

B 7013.3 PV

plaques porteuses, le diaphragme d'ouverture étant suffisamment ouvert, puis en diminuant l'ouverture de ce diaphragme pour accroître la profondeur de champ, jusqu'à ce que l'image des signes de repérage soit nette.

On peut ainsi faire apparaître à la demande, superposée à l'image de la microfiche, celle des signes de repérage. La plaque de repérage est alors placée le plus près possible de l'une des deux plaques porteuses pour que la netteté des signes de repérage ne nécessite pas une profondeur de champ élevée.

Dans le mode de mise en oeuvre précédent, les visualisations successives peuvent, par exemple, également être réalisées en mettant au point sur la microfiche, puis en déplaçant la plaque de repérage de façon à ce qu'elle reste parallèle à elle-même, grâce à un système de translation solidaire du système de déplacement des plaques porteuses et d'un type en soi connu, pour amener cette plaque de repérage au contact de l'une des plaques porteuses, l'ouverture du diaphragme étant telle que l'on ait une profondeur de champ au moins égale à l'épaisseur de la plaque porteuse en contact avec la plaque de repérage.

On peut ainsi faire également apparaître à la demande, superposée à l'image de la microfiche, celle des signes de repérage.

Avec une profondeur de champ convenable, les signes de repérage et les informations considérées de la microfiche sont simultanément nets.

Le système de translation, réalisable par l'homme de l'art, permet de faire descendre la plaque de repérage vers la plaque porteuse supérieure lorsque la plaque de repérage est au-dessus de cette dernière.

B 7013.3 PV

De même, le système de translation permet de faire monter la plaque de repérage vers la plaque porteuse inférieure lorsqu'elle est placée en-dessous de cette dernière.

La présente invention concerne par ailleurs un dispositif de repérage d'informations portées sur une microfiche placée dans un lecteur de microfiches, ce lecteur comprenant un système d'éclairage envoyant un faisceau lumineux sur la microfiche enserrée par une plaque porteuse inférieure et une plaque porteuse supérieure transparentes, parallèles, solidaires l'une de l'autre, déplaçables selon deux directions perpendiculaires grâce à un système de déplacement, l'information lumineuse issue de la microfiche étant ensuite transmise à un système de visualisation, dispositif caractérisé en ce qu'il comporte une plaque de repérage transparente, parallèle aux plaques porteuses et solidaire de celles-ci, portant un ensemble de signes de repérage, le repérage d'informations portées sur la microfiche se faisant grâce à deux visualisations successives sur un même écran, l'une faisant apparaître des signes de repérage portés sur la plaque de repérage, l'autre faisant apparaître les informations correspondantes portées sur la microfiche et faisant face aux signes de repérage.

Ce dispositif est donc utilisé lorsqu'on procède au repérage des informations contenues dans la microfiche ou, inversement, à leur recherche, comme on l'a vu plus haut.

La plaque de repérage comporte un réseau de signes. Il peut s'agir, par exemple, d'une plaque sur laquelle sont portés sous forme matricielle des couples de nombres entiers (1,1), (2,1), (3,1),... régulièrement espacés sur la plaque, le couple (x,y) correspondant à la ligne x et à la colonne y.

Dans un mode de réalisation particulier du dispositif objet de l'invention, la plaque de repérage est placée au-dessus de la plaque porteuse supérieure, cette dernière ayant de préférence une épaisseur au plus égale à 3 mm et les signes de repérage étant portés par la face inférieure de la plaque de repérage.

La plaque porteuse supérieure est de préférence suffisamment mince pour que le changement de mise au point permettant de passer d'une visualisation des informations à la visualisation des signes de repérage correspondants soit minime. Une épaisseur comprise entre 2 et 3 mm pour la plaque porteuse supérieure convient. Pour la même raison, il est préférable de placer les signes de repérage le plus près possible de la microfiche.

Dans un autre mode de réalisation particulier du dispositif objet de l'invention, la plaque de repérage est placée en-dessous de la plaque porteuse inférieure, cette dernière ayant de préférence une épaisseur au plus égale à 3 mm et les signes de repérage étant portés par la face supérieure de la plaque de repérage.

Les justifications de ce mode de réalisation particulier sont identiques à celles du mode de réalisation particulier précédent.

Dans une réalisation particulière du dispositif objet de l'invention, la plaque de repérage est confondue avec la plaque porteuse supérieure, les signes de repérage étant donc portés par cette plaque porteuse, et disposés sur la face supérieure de cette plaque porteuse.

Cette réalisation particulière présente l'intérêt de rapprocher encore plus informations de la microfiche et signes de repérage correspondants.

Il en est de même en ce qui concerne une autre réalisation particulière selon laquelle la plaque de repérage est confondue avec la plaque porteuse inférieure, les signes de repérage étant donc portés par cette plaque porteuse, et disposés sur la face inférieure de cette plaque porteuse.

Selon une caractéristique particulière du dispositif objet de l'invention, les signes de repérage sont opaques. Ils peuvent, par exemple, être imprimés sur la plaque de repérage.

Selon une autre caractéristique particulière du dispositif objet de l'invention, les signes de repérage sont diffusants. Ils peuvent être, par exemple, gravés sur la plaque de repérage et la gravure peut, par exemple, consister en une attaque chimique, un sablage ou encore une gravure en relief de la plaque de repérage.

Selon une autre caractéristique particulière du dispositif objet de l'invention, celui-ci comporte en outre un système de translation solidaire du système de déplacement des plaques porteuses et d'un type en soi connu, permettant de déplacer la plaque de repérage, de façon à ce qu'elle reste parallèle à elle-même, pour l'amener au contact de l'une des plaques porteuses, ce qui permet de visualiser simultanément des informations portées par la microfiche et les signes de repérage correspondants, la profondeur de champ étant convenable.

D'autres caractéristiques du procédé et du dispositif objets de l'invention apparaîtront encore à travers la description qui suit d'un exemple de mise en oeuvre, donné à titre indicatif et non limitatif, en référence aux dessins annexés sur lesquels :

    - la figure 1 représente schématiquement un lecteur de microfiches incluant un dispositif conforme à l'invention,

- la figure 2 représente schématiquement un système de translation inclus dans une réalisation particulière du dispositif objet de l'invention.

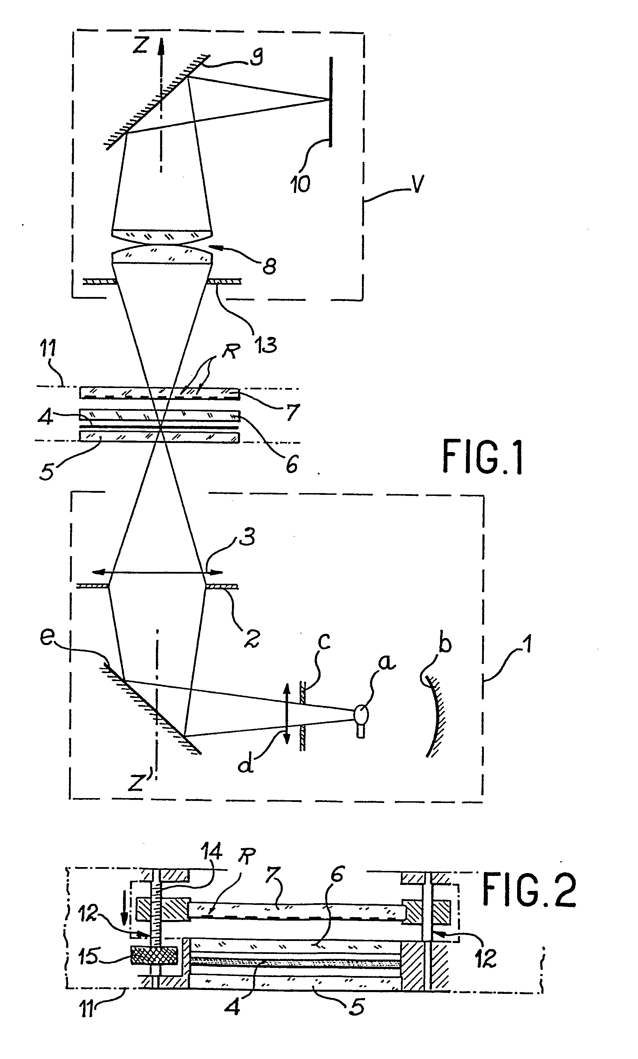

Le lecteur de microfiches représenté schématiquement sur la figure 1 et incluant un dispositif conforme à l'invention, comporte principalement et de façon connue : un système 1 d'éclairage, lui-même formé d'une source lumineuse a, d'un réflecteur b, d'un diaphragme de champ c, d'un objectif d, d'un miroir e, d'un diaphragme d'ouverture 2 et d'un système d'illumination ou condenseur 3.

De façon classique, ce système 1 d'éclairage envoie un faisceau lumineux sur la microfiche 4 par l'intermédiaire du diaphragme d'ouverture 2, puis du système d'illumination, ou condenseur 3, la microfiche 4 étant prise entre une plaque porteuse inférieure 5 et une plaque porteuse supérieure 6 transparentes, parallèles, solidaires l'une de l'autre, déplaçables selon deux directions perpendiculaires grâce à un système de déplacement 11, de type bien connu en soi et représenté très schématiquement sur la figure 1. L'information lumineuse issue de la microfiche 4 est ensuite transmise à un système de visualisation V constitué d'un objectif de projection ou visualisation 8 muni de son diaphragme d'ouverture 13 et suivi d'un miroir 9 et d'un écran de lecture 10.

L'invention consiste à ajouter à ce lecteur de microfiches classique une plaque de repérage 7 transparente, parallèle aux plaques porteuses 5 et 6 et solidaire de celles-ci, portant un ensemble de signes de repérage R qui sont par exemple constitués de couples de coordonnées.

Les plaques porteuses 5 et 6, et donc la plaque de repérage 7, sont par exemple disposées horizontalement et le système de déplacement 11 permet de les déplacer selon deux directions perpendiculaires dans un plan horizontal. Le système 1 d'éclairage et le système de visualisation V sont placés en conséquence. Ainsi l'axe Z'Z de l'objectif de projection 8 est-il vertical.

Dans le mode de mise en oeuvre particulier représenté sur la figure 1, la plaque de repérage 7 est au-dessus de la plaque porteuse supérieure 6 et comporte des signes de repérage R opaques tracés sur sa face inférieure. Grâce au parallélisme de la plaque de repérage 7 et de la microfiche 4, il y a une correspondance biunivoque entre un couple de coordonnées et l'information située immédiatement en-dessous, sur la microfiche 4.

Pour repérer une information portée par la microfiche 4, c'est-à-dire attribuer un couple de coordonnées à cette information, on met au point sur la microfiche 4 grâce à l'objectif de projection 8 et par des déplacements horizontaux éventuels de la microfiche 4, effectués grâce au système de déplacement 11, on fait apparaître sur l'écran de lecture 10 l'information choisie. On change ensuite la mise au point de façon à voir nettement sur l'écran de lecture 10 le couple de coordonnées (x, y) associé à l'information choisie et situé immédiatement au-dessus de celle-ci sur la plaque de repérage 7. On repère ainsi l'information par le couple (x,y). Inversement, pour retrouver une information connaissant ses coordonnées (x,y), on fait apparaître sur l'écran de lecture 10 le couple (x,y) et l'on change la mise au point pour faire apparaître sur l'écran de lecture 10 l'information située immédiatement en-dessous du couple (x,y), sur la microfiche 4, c'est-à-dire l'information cherchée.

B 7013.3 PV

En disposant la plaque de repérage 7 le plus près possible de la plaque porteuse supérieure 6, on peut également réaliser une première visualisation en mettant au point sur la microfiche 4 grâce à l'objectif de projection 8, le diaphragme 13 étant suffisamment ouvert puis une seconde visualisation, en diminuant l'ouverture de ce diaphragme 13, pour accroître la profondeur de champ suffisamment pour que l'image des signes de repérage soit nette. Cette image apparaît alors superposée à celle de la microfiche 4 sur l'écran 10.

Sur la figure 2 est représenté schématiquement un système de translation 12 inclus dans une réalisation particulière du dispositif objet de l'invention. Cette réalisation particulière permet une mise en oeuvre particulière du procédé objet de l'invention selon laquelle les visualisation successives sont réalisées en mettant au point sur la microfiche 4, grâce à l'objectif de projection 8, puis en déplaçant la plaque de repérage 7 de façon à ce qu'elle reste parallèle à elle-même, grâce au système de translation 12 rendu solidaire du système de déplacement 11 des plaques porteuses 5 et 6, pour amener cette plaque de repérage 7 au contact de l'une des plaques porteuses 5 et 6, par exemple la plaque 6, l'ouverture du diaphragme 13 (figure 1) étant telle que l'on ait une profondeur de champ au moins égale à l'épaisseur de la plaque porteuse 6 en contact avec la plaque de repérage 7, ce qui permet à l'image des signes de la plaque de repérage 7 d'apparaître superposée à celle de la microfiche 4 sur l'écran 10 (figure 1).

Le système 12, bien connu, comporte par exemple quatre tiges dont l'une 14 est filetée, solidaires du système de déplacement 11 et sur les-

B 7013.3 PV

quelles vient s'adapter la plaque de repérage 7 pouvant être déplacée verticalement en agissant sur un écrou molleté 15 solidaire de la tige filetée 14.

Bien entendu, le système de translation 12 venant d'être décrit pourrait être remplacé par tout autre système permettant de déplacer verticalement la plaque de repérage 7, par exemple un système mécanique à levier réalisable par l'homme de l'art et permettant à la plaque de repérage 7 d'occuper l'une des deux positions suivantes : une position haute dans laquelle la plaque de repérage 7 est éloignée de la plaque porteuse 6 et une position basse dans laquelle elle est au contact de cette plaque porteuse 6. Ce système mécanique à levier est par exemple du genre de celui qui est décrit dans le brevet des Etats Unis d'Amérique n° 3,319,518 cité plus haut et représenté sur la figure 3 dudit brevet.

Le procédé et le dispositif objets de l'invention permettent donc de retrouver facilement et rapidement une information sur une microfiche ou, inversement, de repérer une telle information.

B 7013.3 PV

## REVENDICATIONS

1. Procédé de repérage d'informations portées sur une microfiche (4) placée dans un lecteur de microfiches, ce lecteur comportant un système (1) d'éclairage envoyant un faisceau lumineux sur la microfiche (4) enserrée par une plaque porteuse inférieure (5) et une plaque porteuse supérieure (6) transparentes, parallèles, solidaires l'une de l'autre, déplaçables selon deux directions perpendiculaires grâce à un système de déplacement (11), l'information lumineuse issue de la microfiche (4) étant ensuite transmise à un système de visualisation (V), procédé caractérisé en ce qu'il consiste à faire deux visualisations successives sur un même écran (10), l'une faisant apparaître des informations portées sur la microfiche (4), l'autre faisant apparaître des signes de repérage (R) correspondant à ces informations et leur faisant face sur une plaque de repérage (7) transparente, parallèle aux plaques porteuses (5, 6) et solidaire de celles-ci.

2. Procédé selon la revendication 1, du type dans lequel le faisceau lumineux de visualisation issu de la microfiche (4) est projeté sur l'écran (10) par un objectif de projection (8), caractérisé en ce que les visualisations successives sont réalisées en déplaçant l'objectif de projection (8) parallèlement à son axe Z'Z pour mettre au point sur des informations de la microfiche (4) puis sur les signes de repérage correspondants portés sur la plaque de repérage (7).

3. Procédé selon la revendication 1, caractérisé en ce que les visualisations successives sont réalisées en faisant une mise au point sur les

**0041888**

informations portées par la microfiche (4) et en adaptant la profondeur de champ de façon que cette dernière soit suffisamment grande pour que, sur l'écran (10), l'image des signes de repérage apparaîsse superposée aux informations portées par la microfiche (4) lors de la visualisation faisant apparaître les signes de repérage.

4. Procédé selon la revendication 3, du type dans lequel le faisceau lumineux de visualisation issu de la microfiche (4) est projeté sur l'écran (10) par un objectif de projection (8) muni d'un diaphragme d'ouverture (13), caractérisé en ce que les visualisations successives sont réalisées en mettant au point sur la microfiche (4), la plaque de repérage (7) étant placée le plus près possible de l'une des deux plaques porteuses (5, 6), le diaphragme d'ouverture (13) étant suffisamment ouvert, puis en diminuant l'ouverture de ce diaphragme (13), pour accroître la profondeur de champ jusqu'à ce que l'image des signes de repérage soit nette.

5. Procédé selon la revendication 3, caractérisé en ce que les visualisations successives sont réalisées en mettant au point sur la microfiche (4) puis en déplaçant la plaque de repérage (7) de façon à ce qu'elle reste parallèle à elle-même, grâce à un système de translation (12) solidaire du système de déplacement (11) des plaques porteuses (5, 6), pour amener cette plaque de repérage (7) au contact de l'une des plaques porteuses (5, 6), l'ouverture d'un diaphragme (13), faisant partie du système de visualisation (V), étant telle que l'on ait une profondeur de champ au moins égale à l'épaisseur de la plaque porteuse en contact avec la plaque de repérage (7).

6. Dispositif de repérage d'informations

B 7013.3 PV

portées sur une microfiche (4) placée dans un lecteur de microfiches, ce lecteur comprenant un système (1) d'éclairage envoyant un faisceau lumineux sur la microfiche (4) enserrée par une plaque porteuse inférieure (5) et une plaque porteuse supérieure (6) transparentes, parallèles, solidaires l'une de l'autre, déplaçables selon deux directions perpendiculaires grâce à un système de déplacement (11), l'information lumineuse issue de la microfiche (4) étant ensuite transmise à un système de visualisation (V), dispositif caractérisé en ce qu'il comporte une plaque de repérage (7) transparente, parallèle aux plaques porteuses (5, 6) et solidaire de celles-ci, portant un ensemble de signes de repérage, le repérage d'informations portées sur la microfiche (4) se faisant grâce à deux visualisations successives sur un même écran (10), l'une faisant apparaître des signes de repérage portés sur la plaque de repérage (7), l'autre faisant apparaître les informations correspondantes portées sur la microfiche (4) et faisant face aux signes de repérage.

7. Dispositif selon la revendication 6, caractérisé en ce que la plaque de repérage (7) est placée au-dessus de la plaque porteuse supérieure (6), les signes de repérage étant portés par la face inférieure de la plaque de repérage (7).

8. Dispositif selon la revendication 6, caractérisé en ce que la plaque de repérage (7) est placée en-dessous de la plaque porteuse inférieure (5), les signes de repérage étant portés par la face supérieure de la plaque de repérage (7).

9. Dispositif selon la revendication 6, caractérisé en ce que la plaque de repérage (7) est confondue avec la plaque porteuse supérieure (6), les signes de repérage étant donc portés par cette plaque porteuse (6) sur sa face supérieure.

B 7013.3 PV

10. Dispositif selon la revendication 6, caractérisé en ce que la plaque de repérage (7) est confondue avec la plaque porteuse inférieure (5), les signes de repérage étant donc portés par cette plaque porteuse (5) sur sa face inférieure.

11. Dispositif selon l'une quelconque des revendications 6 à 10, caractérisé en ce que les signes de repérage sont opaques.

12. Dispositif selon l'une quelconque des revendications 6 à 10, caractérisé en ce que les signes de repérage sont diffusants.

13. Dispositif selon la revendication 6, caractérisé en ce qu'il comporte en outre un système de translation (12) solidaire du système de déplacement (11) des plaques porteuses (5, 6) et permettant de déplacer la plaque de repérage (7), de façon à ce qu'elle reste parallèle à elle-même, pour l'amener au contact de l'une des plaques porteuses (5, 6), ce qui permet de visualiser simultanément des informations portées par la microfiche (4) et les signes de repérage correspondants, la profondeur de champ étant convenable.

B 7013.3 PV

FIG.1

FIG.2

0041888

**Office européen des brevets**

**RAPPORT DE RECHERCHE EUROPEENNE**

EP 81 40 0877

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| D | <u>US - A - 3 319 518</u> (C.O. CARLSON) <br><br> * colonnes 4-10; colonne 11, lignes 1-23; figures 1-8 * <br><br> & FR - A - 1 475 803 <br><br> -- | 1-4,10 | G 03 B 21/11 |
| | <u>DE - A - 2 610 218</u> (CANON K.K.) <br><br> * pages 5-14; figures 1-9 * <br><br> -- | 1-4 | |
| | <u>US - A - 4 143 953</u> (W. RAUFFER) <br><br> * colonne 3, lignes 34-68; colonne 4, lignes 1-24; figures 1,2 * <br><br> ------ | 1-4 | DOMAINES TECHNIQUES RECHERCHES (Int. Cl.³) <br><br> G 03 B 21/11 <br> 21/16 |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

| | Le présent rapport de recherche a été établi pour toutes les revendications | |
|---|---|---|
| Lieu de la recherche | Date d'achèvement de la recherche | Examinateur |
| La Haye | 12-08-1981 | BOEYKENS |

OEB Form 1503.1 06.78